Europäisches Patentamt

European Patent Office

Office européen des brevets

(11) Numéro de publication: **0 083 519**
**A1**

## (12) DEMANDE DE BREVET EUROPEEN

(21) Numéro de dépôt: **82402187.7**

(22) Date de dépôt: **30.11.82**

(51) Int. Cl.³: **F 16 B 37/04**

(30) Priorité: **11.12.81 FR 8123247**

(43) Date de publication de la demande: **13.07.83**
**Bulletin 83/28**

(84) Etats contractants désignés: **AT BE CH DE GB IT LI LU NL SE**

(71) Demandeur: **RAPID S.A., 251 Boulevard Péreire, F-75852 Paris Cedex 17 (FR)**

(72) Inventeur: **Dubost, Dominique Michel Louis, 53 Résidence Elysée II, F-78170 La Celle Saint Cloud (FR)**

(74) Mandataire: **Durand, Yves Armand Louis et al, Cabinet Z. Weinstein 20, Avenue de Friedland, F-75008 Paris (FR)**

(54) **Dispositif de fixation à montage sur le bord d'un panneau, et assemblage de panneaux obtenu à l'aide de ce dispositif.**

(57) La présente invention concerne un dispositif de fixation à montage par pincement sur le bord d'un panneau.

Ce dispositif comprend essentiellement une languette repliée en U comprenant une première branche (1) avec orifice (6) dont le diamètre est inférieur à celui du filetage (7) d'une vis (8), de façon à éviter la déformation de la deuxième branche (2) sous l'effet de l'effet de l'effort de vissage imprimé à la vis (8), et de façon à obtenir ainsi le positionnement naturel de la vis (8) au droit de l'orifice récepteur et de vissage (9) prévu dans la deuxième branche (2).

Le dispositif de l'invention s'applique notamment à l'assemblage de panneaux ou tôles.

EP 0 083 519 A1

-1-

## Dispositif de fixation à montage sur le bord d'un panneau et assemblage de panneaux obtenu à l'aide de ce dispositif

La présente invention a essentiellement pour objet un dispositif de fixation destiné à être monté sur le bord d'un panneau, tel que par exemple une tôle.

Elle vise également un assemblage de panneaux ou tôles, réalisé à l'aide de ce dispositif de fixation.

On connaît déjà des attaches de fixation présentant la forme générale d'une languette ou analogue replié en U et comportant deux branches aptes à s'emboîter par pincement sur le bord d'un panneau ou d'une tôle. L'une des branches ou première branche de l'attache comportait une ouverture susceptible de permettre le passage d'un élément fileté, tandis que l'autre branche de l'attache comportait un orifice récepteur préalablement fileté ou non et dans lequel on effectuait le vissage de l'élément fileté.

On utilisait une telle attache de la manière suivante. L'attache était insérée sur le bord d'une tôle par exemple, de manière que l'ouverture de la première branche, qui se trouve en alignement axial avec l'orifice récepteur de la vis dans la deuxième branche, soit positionnée au droit d'un orifice prévu dans le panneau. Ceci étant fait, on positionne une pièce à fixer, telle que par exemple une tôle munie elle aussi d'un orifice, sur le panneau équipé de l'attache. On peut alors fixer les deux tôles par une vis qui traverse successivement la tôle à fixer, l'ouverture dans la première branche de l'attache, l'ouverture du panneau sur lequel est pincée l'attache, et qui finalement est vissée dans l'orifice récepteur de la deuxième branche de ladite attache.

Cependant, l'assemblage de deux panneaux ou tôles à l'aide d'une telle attache constituait dans la pratique un montage très difficile à réaliser. En effet, la deuxième branche de l'attache dans laquelle s'effectue le vissage doit supporter les efforts de l'outil (tourne-vis ou visseuse) agissant sur la vis. Or, comme ces attaches sont réalisées en une matière élastiquement déformable, tel que plastique ou feuille métallique, on comprend que les efforts de l'outil de vissage provoquent nécessairement une déformation de la deuxième branche de l'attache, de sorte que l'axe de la vis ne peut pas se trouver en alignement avec l'axe de l'orifice récepteur de la deuxième branche, et, finalement le vissage, et donc l'assemblage, ne peut être obtenu qu'au prix de grandes difficultés.

Or, jusqu'à présent, on n'a jamais proposé pour le genre d'attache concerné par la présente invention, une solution permettant de résoudre le problème ci-dessus, c'est-à-dire l'alignement rigoureux de la vis et de l'orifice récepteur ou de vissage de cette vis, et ce quel que soit l'effort imprimé à la vis pour réaliser le vissage dans ledit orifice.

La présente invention a pour but de combler cette
lacune en proposant une attache perfectionnée de
fixation qui remédie aux inconvénients sus-mentionnés.

A cet effet, l'invention a pour objet un dispositif
de fixation à montage sur le bord d'un panneau, tel que
par exemple une tôle, et du type comprenant une
languette ou analogue repliée en U pour ainsi réaliser
deux branches aptes à s'emboîter par pincement sur le
bord dudit panneau, l'une des branches ou première
branche comportant une ouverture pour laisser le passage à un élément fileté traversant le panneau et
vissé dans un orifice récepteur prévu dans l'autre
branche ou deuxième branche du U de la languette,
caractérisé en ce qu'en vue d'éviter la déformation
de la deuxième branche sous l'effet de l'effort de vissage imprimé à l'élément fileté à visser dans ledit
orifice récepteur, l'ouverture pratiquée dans la première branche de la languette présente un diamètre tel
qu'il offre une résistance à la pénétration de l'élément fileté au travers de ladite ouverture.

On comprend ainsi que grâce à la résistance que
présente l'ouverture de la première branche, cette
dernière supportera les efforts de l'outil de vissage de l'élément fileté, lequel se positionnera alors
naturellement dans l'orifice récepteur de la deuxième
branche sans risque de déformer celle-ci et d'empêcher
le vissage.

Suivant un premier mode de réalisation, le dispositif
de fixation précité est réalisé en matière plastique
moulée et est caractérisé en ce que l'ouverture
pratiquée dans la première branche constitue un orifice auto-taraudable et ayant un diamètre légèrement inférieur à celui du filetage de l'élément fileté précité.

Avantageusement, le diamètre précité de l'orifice auto-taraudable de la première branche est légèrement supérieur à l'orifice récepteur auto-taraudable de la deuxième branche.

Ainsi, on sera certain d'obtenir un bon serrage et par conséquent un assemblage satisfaisant de deux tôles ou panneaux.

Suivant un autre mode de réalisation, le dispositif de fixation selon l'invention est réalisé en métal, et comprend une deuxième branche portant un écrou à filetage correspondant à celui de l'élémnet fileté ou de la vis, et est caractérisé en ce que l'ouverture pratiquée dans la première branche de la languette est formée entre deux pattes en vis-à-vis découpées dans ladite première branche et délimitant entre elles un orifice de diamètre correspondant sensiblement à celui de l'élément fileté.

Autrement dit, dans ce cas là, le simple fait que le filetage de la vis soit en prise dans l'orifice précité de la première branche, permet à cette branche d'encaisser les efforts de l'outil de vissage, de sorte que la vis se positionnera naturellement dans l'écrou de la deuxième branche sans risques de déformer celle-ci et donc de nuire au vissage correct de la vis.

D'autres caractéristiques et avantages de l'invention apparaîtront mieux dans la description détaillée qui suit et se réfère aux dessins annexés donnés uniquement à titre d'exemple, et dans lesquels :

La figure 1 est une vue en coupe d'un premier mode de réalisation de dispositif de fixation selon l'invention et prêt à réaliser l'assemblage de deux panneaux,

la figure 2 est une vue de dessus de l'assemblage de la figure 1, la vis et le panneau à fixer étant enlevés,

la figure 3 est une vue en coupe similaire à la figure 1 mais montrant un deuxième mode de réalisation de dispositif de fixation selon l'invention, et

la figure 4 est une vue de dessus similaire à la figure 2, mais montrant le deuxième mode de réalisation de dispositif de fixation suivant l'invention.

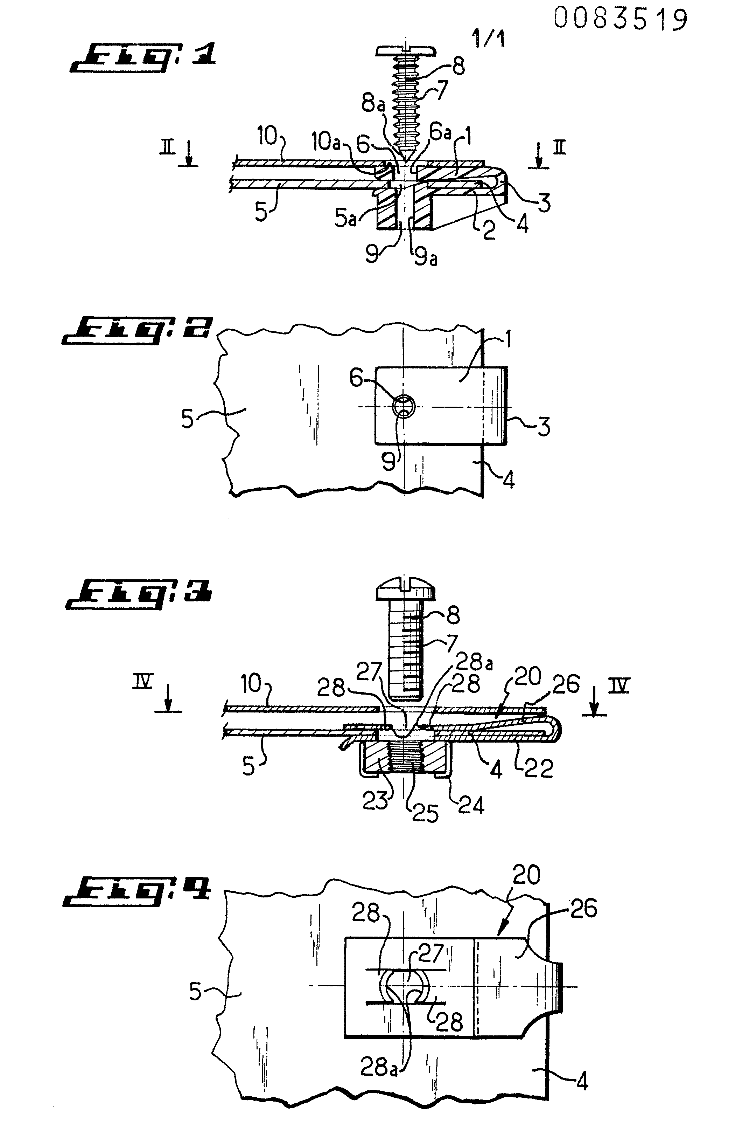

Suivant l'exemple de réalisation illustré par les figures 1 et 2, un dispositif de fixation conforme à l'invention est obtenu par moulage d'une matière plastique appropriée et présente la forme générale d'un U comportant deux branches, à savoir, une première branche 1 et une deuxième branche 2 réunies par une partie 3 et aptes à s'emboîter par pincement sur le bord 4 d'un panneau 5 qui peut être une tôle par exemple.

La première branche 1 comporte un orifice 6 auto-taraudable et dont le diamètre, suivant une caractéristique essentielle de l'invention, est légèrement inférieur à celui du filetage 7 de l'élément fileté 8 qui, suivant l'exemple de réalisation représenté, est une vis.

La deuxième branche 2 comporte un orifice auto-taraudable 9 dont le diamètre est, comme on le voit bien sur la figure 1, légèrement inférieur au diamètre de l'orifice 6 de la première branche 1.

On expliquera maintenant comment fonctionne le dispositif de fixation ou attache montrée sur les figures 1 et 2.

L'attache est tout d'abord montée par pincement sur le bord 4 du panneau 5 de manière que les orifices 6 et 9 de l'attache soient sensiblement en alignement avec un orifice 5a prévu dans ledit panneau sur lequel on désire fixer un deuxième panneau ou tôle 10 comportant lui aussi une ouverture 10a.

La vis 8 est introduite par l'ouverture 10a de la tôle 10 jusqu'à ce que les premiers filets 7 de la vis 8 rencontrent la paroi circulaire 6a délimitant l'orifice 6. A ce stade, on doit exercer un très léger effort sur la vis 8, à l'aide d'un tournevis, pour que celle-ci franchisse l'orifice 6 et également l'ouverture 5a du panneau 5. Et cela jusqu'à ce que les premiers filets 7 de la vis 8 rencontrent la paroi 9a délimitant l'orifice 9 de la deuxième branche 2 de l'attache.

Il est important de remarquer ici que l'extrémité 8a de la vis 8 viendra se posionner naturellement dans l'axe de l'orifice 9 puisque les efforts impartis à la vis 8 par le tournevis seront encaissés par l'orifice 6, c'est-à-dire par la branche 1 de l'attache, et non pas par l'orifice 9, c'est-à-dire par la branche 2 de l'attache, comme c'était le cas antérieurement. En effet, dans les attaches antérieures, l'orifice 6 de la première branche 1 avait un diamètre nettement plus grand que celui fileté 8, de sorte que c'était la branche 2 de l'attache qui devait encaisser les efforts du tournevis et qui se déformait en s'écartant de la branche 1 sous l'effet de la poussée du tournevis, ce qui finalement empêchait le vissage.

Revenant à l'invention, la vis 8 se trouvera nécessairement en alignement avec l'orifice 9 et s'y vissera, puisque le filetage 7 de la vis réalisera un taraudage dans la paroi 9a de l'orifice 9. En raison du fait que cet orifice possède un diamètre légèrement inférieur à celui du diamètre de l'orifice 6, on obtiendra, en fin de vissage, un excellent serrage ou assemblage des tôles 5 et 10.

On décrira maintenant brièvement le deuxième mode de réalisation d'attache conforme à l'invention et illustré par les figures 3 et 4.

Ici, l'attache est réalisée à partir d'un flan métallique replié en U 20 dont la deuxième branche 22 porte un écrou 23 encagé au moyen de griffes 24. Le filetage 25 de l'écrou 23 correspond évidemment au filetage 7 de la vis 8.

La première branche 26 de l'attache 20 comporte une ouverture 27 formée entre deux parties 28 en vis-à-vis et découpées dans ladite branche 26. Plus précisément, les pattes métalliques 28 sont situées dans le même plan que la branche 26 comme représenté sur la figure 3, ou sont légèrement surélevées par rapport à cette branche, et lesdites pattes délimitent entre elles un orifice 27 tel que son diamètre corresponde sensiblement à celui de l'élément fileté 8. Ainsi, pour que la vis 8 franchisse l'orifice 27, il faudra, visser cette vis dans ledit orifice à l'aide d'un outil car les filets de la vis viendront en prise avec les bords 28a des pattes 28.

Le fonctionnement de l'attache qui vient d'être décrite ne sera pas décrit en détail, puisqu'il est sensiblement le même et présente les mêmes avantages que pour le mode de réalisation des figures 1 et 2 qui a été discuté précédemment.

La seule différence est que, ici, les orifices 27 et 25 ne sont pas auto-taraudables. Mais, comme cela a été dit pour le mode de réalisation précédent, la branche 26 encaissera les efforts de l'outil de vissage par le fait qu'il faudra visser la vis 8 dans l'orifice 27,

0083519

et par conséquent, la vis 8 se positionnera naturellement dans l'axe de l'orifice fileté 25 de l'écrou 23 sans risque de déformer la deuxième branche 22 de l'attache, ce qui empêcherait le vissage.

On ajoutera cependant ici que le mode de réalisation des figures 3 et 4 exige un positionnement ou alignement axial de la vis 8 par rapport à l'alésage fileté 25 de l'écrou 23, beaucoup plus précis que ce n'était le cas avec l'attache auto-taraudable de la figure 1. En d'autres termes, les avantages procurés par l'invention trouvent leur pleine signification au regard de l'attache de la figure 3, étant bien entendu que ces avantages se retrouvent également dans l'attache en matière plastique de la figure 1 et dont les branches peuvent présenter une tendance à la déformation plus marquée sous l'effet du vissage.

On a donc réalisé suivant l'invention une attache en U dont la branche formant écrou ne risque en aucun cas de se déformer et d'empêcher ainsi le vissage sous l'effet des efforts imposés à la vis.

Revendications

1. Dispositif de fixation à montage sur le bord d'un panneau, tel que par exemple une tôle, et du type comprenant une languette ou analogue repliée en U pour ainsi réaliser deux branches aptes à s'emboîter par pincement sur le bord dudit panneau, l'une des branches ou première branche comportant une ouverture pour laisser le passage à un élément fileté traversant le panneau et vissé dans un orifice récepteur prévu dans l'autre branche ou deuxième branche du U de la languette, caractérisé en ce qu'en vue d'éviter la déformation de la deuxième branche (2, 22) sous l'effet de l'effort de vissage imprimé à l'élément fileté (8) à visser dans ledit orifice récepteur (9, 25), l'ouverture (6, 27 pratiquée dans la première branche (1, 26) du U presente un diamètre tel qu'il offre une résistance à la pénétration de l'élément fileté (8) au travers de ladite ouverture (6, 27).

2. Dispositif de fixation selon la revendication 1 et réalisé en matière plastique moulée, caractérisé en ce que l'ouverture (6) pratiquée dans la première branche (1) constitue un orifice auto-taraudable ayant un diamètre légèrement inférieur à celui du filetage (7) de l'élément fileté précité (8).

3. Dispositif selon la revendication 2, caractérisé en ce que le diamètre précité de l'orifice auto-taraudable (6) de la première branche (1) est légèrement supérieur à celui de l'orifice récepteur auto-taraudable (9) de la deuxième branche (2).

4. Dispositif de fixation selon la revendication 1, réalisé en métal et dont la deuxième branche porte un écrou à filetage correspondant à celui de l'élément fileté, caractérisé en ce que l'ouverture (27) pratiquée dans la première branche (26) est formée entre deux pattes (28) en vis-à-vis et découpées dans ladite branche (26) et délimitant entre elles un orifice de diamètre correspondant sensiblement à celui de l'élément fileté (8).

5. Assemblage d'au moins deux panneaux ou tôles (5,10), obtenu à l'aide d'un ou plusieurs dispositifs de fixation selon l'une des revendications 1 à 4.

Fig.1

Fig.2

Fig.3

Fig.4

Office européen
des brevets

**RAPPORT DE RECHERCHE EUROPEENNE**

Numéro de la demande

EP 82 40 2187

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-B-1 110 956 (ROHE) <br> * Figure 4 * | 1,5 | F 16 B 37/04 |
| A | US-A-2 326 285 (BURKE) <br> * Figure 11 * | 1 | |
| A | FR-A-1 400 625 (RAPID) | 1-3 | |
| P,X | FR-A-2 492 015 (COMET) <br> * Figure 3 * | 1-3 | |

DOMAINES TECHNIQUES
RECHERCHES (Int. Cl. ³)

F 16 B

Le présent rapport de recherche a été établi pour toutes les revendications

| Lieu de la recherche <br> LA HAYE | Date d'achèvement de la recherche <br> 14-04-1983 | Examinateur <br> VAN DER WAL W |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82